# EUROPEAN PATENT APPLICATION

(11) **EP 4 838 414 A1**
(43) Date of publication of application: **11.11.2026**
(21) Application number: 24918152.0
(22) Date of filing: 28.10.2024
(51) Int. Cl.: G06N 3/0455

(54) **MODEL TRAINING METHOD AND APPARATUS, AND INFORMATION RETRIEVAL METHOD AND APPARATUS**

(30) Priority: 18.01.2024 CN 202410077725
(71) Applicant: Ant Blockchain Technology (Shanghai) Co., Ltd., Shanghai 200010 (CN)
(72) Inventor: TANG, Dongqi, Hangzhou, Zhejiang 310000 (CN); LI, Ruoyu, Hangzhou, Zhejiang 310000 (CN)
(74) Representative: Winter, Brandl - Partnerschaft mbB
(86) International application number: PCT/CN2024/127718
(87) International publication number: WO 2025/152543

(57) **Abstract**

Disclosed in the description are a model training method and apparatus, and an information retrieval method and apparatus. The model training method comprises: acquiring a retrieval model; selecting a first encoder and a second encoder from the retrieval model, and inputting into the retrieval model a first training sample which is in a mode corresponding to the first encoder and a second training sample which is in a mode corresponding to the second encoder, so as to determine a matching result for the first training sample and the second training sample on the basis of a first encoding result obtained by means of the first encoder encoding the first training sample and a second encoding result obtained by means of the second encoder encoding the second training sample; training the first encoder and the second encoder; fixing network parameters in the first encoder, and for other encoders in the retrieval model, inputting into the other encoders third training samples which are in modes corresponding to the other encoders, so as to train the other encoders. Thus, the consumption of too many computing resources is avoided, and model management costs are reduced.

## Description

### TECHNICAL FIELD

The present specification relates to the field of computer technologies, and in particular to a method and apparatus for model training and information retrieval.

### BACKGROUND

With the rapid development of and widespread attention to online services, the forms of media content (that is, modalities) that users can access have become increasingly diverse. For example, users can browse text, listen to music, view images, and browse videos through the Internet. With the integration of artificial intelligence technologies into the Internet, not only can richer service experiences be brought to users, but the security of user information and personal privacy data can also be protected more effectively.

At present, a user may use data of one modality to retrieve matching data of another modality. For example, assuming that the user inputs a piece of descriptive text, a server or cloud platform may, on the basis of the piece of descriptive text, search for an image conforming to the textual content of the descriptive text and return the image to the user. In this example, the descriptive text is data of one modality, and the returned image is data of another modality.

However, in practical applications, if pairwise mutual retrieval among n modalities is to be implemented, a corresponding machine learning model needs to be constructed for each pair of modalities, and the machine learning model needs to be trained, so as to implement mutual retrieval between the two modalities. However, because this approach requires one model to be constructed between each two modalities, relatively large amounts of computing resources will be consumed, and the model management cost will also be greatly increased.

Therefore, how to avoid the consumption of relatively large amounts of computing resources and reduce the model management cost is an urgent problem to be solved.

### SUMMARY

The present specification provides a method and apparatus for model training and information retrieval, so as to avoid the consumption of computing resources in information retrieval and reduce the management cost of an information retrieval model.

The present specification adopts the following technical solutions.

The present specification provides a method for model training, including: acquiring a retrieval model, wherein the retrieval model comprises a plurality of encoders, and different ones of the plurality of encoders are configured to encode data of different modalities; selecting a first encoder and a second encoder from the retrieval model, and acquiring a first training sample in a modality corresponding to the first encoder, and acquiring a second training sample in a modality corresponding to the second encoder; inputting the first training sample and the second training sample into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample; training the first encoder and the second encoder based on the matching result; and fixing network parameters in the trained first encoder and, for each other encoder in the retrieval model other than the first encoder and the second encoder, inputting an acquired third training sample in a modality corresponding to the other encoder into the other encoder, so as to train the other encoder based on an encoding result output by the other encoder and an encoding result output by the trained first encoder with the network parameters fixed.

In some examples, data of the modalities comprise at least one of text data, image data, video data, audio data, and service sequence data.

In some examples, training the first encoder and the second encoder based on the matching result includes: determining annotation information between the first training sample and the second training sample, wherein the annotation information represents an actual matching relationship between the first training sample and the second training sample; if it is determined, based on the annotation information, that the first training sample matches the second training sample, training the first encoder and the second encoder with minimizing a difference between the first encoding result and the second encoding result and minimizing a difference between the annotation information and the matching result as optimization objectives; and if it is determined, based on the annotation information, that the first training sample does not match the second training sample, training the first encoder and the second encoder with maximizing a difference between the first encoding result and the second encoding result and minimizing a difference between the annotation information and the matching result as optimization objectives.

In some examples, acquiring the first training sample in the modality corresponding to the first encoder, and acquiring the second training sample in the modality corresponding to the second encoder, includes: acquiring the first training sample in the modality corresponding to the first encoder, and inputting the first training sample into a preset generation model to cause the generation model to output, based on the first training sample, data in the modality corresponding to the second encoder as generated data corresponding to the first training sample; and acquiring the second training sample in the modality corresponding to the second encoder based on the generated data corresponding to the first training sample.

The present specification further provides a method for information retrieval, including: in response to an information retrieval request, determining retrieval data and a modality corresponding to data retrieved on the basis of the retrieval data as a target modality, wherein a modality corresponding to the retrieval data is different from the target modality; determining pieces of candidate data corresponding to the retrieval data in the target modality; inputting the retrieval data and the pieces of candidate data into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the method for model training; and determining, based on the encoding result corresponding to the retrieval data and the encoding results corresponding to the pieces of candidate data, an information retrieval result for the retrieval data.

The present specification provides an apparatus for model training, including: an acquisition module, configured to acquire a retrieval model, wherein the retrieval model comprises a plurality of encoders, and different ones of the plurality of encoders are configured to encode data of different modalities; a selection module, configured to select a first encoder and a second encoder from the retrieval model, and acquire a first training sample in a modality corresponding to the first encoder, and acquire a second training sample in a modality corresponding to the second encoder; an encoding module, configured to input the first training sample and the second training sample into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample; a first training module, configured to train the first encoder and the second encoder based on the matching result; and a second training module, configured to fix network parameters in the trained first encoder and, for each other encoder in the retrieval model other than the first encoder and the second encoder, input an acquired third training sample in a modality corresponding to the other encoder into the other encoder, so as to train the other encoder based on an encoding result output by the other encoder and an encoding result output by the trained first encoder with the network parameters fixed.

In some examples, data of the modalities comprise at least one of text data, image data, video data, audio data, and service sequence data.

In some examples, the first training module is specifically configured to determine annotation information between the first training sample and the second training sample, wherein the annotation information represents an actual matching relationship between the first training sample and the second training sample; if it is determined, based on the annotation information, that the first training sample matches the second training sample, train the first encoder and the second encoder with minimizing a difference between the first encoding result and the second encoding result and minimizing a difference between the annotation information and the matching result as optimization objectives; and if it is determined, based on the annotation information, that the first training sample does not match the second training sample, train the first encoder and the second encoder with maximizing a difference between the first encoding result and the second encoding result and minimizing a difference between the annotation information and the matching result as optimization objectives.

In some examples, the selection module is specifically configured to acquire the first training sample in the modality corresponding to the first encoder, and input the first training sample into a preset generation model to cause the generation model to output, based on the first training sample, data in the modality corresponding to the second encoder as generated data corresponding to the first training sample; and acquire the second training sample in the modality corresponding to the second encoder based on the generated data corresponding to the first training sample.

The present specification further provides an apparatus for information retrieval, including: a response module, configured to, in response to an information retrieval request, determine retrieval data and a modality corresponding to data retrieved on the basis of the retrieval data as a target modality, wherein a modality corresponding to the retrieval data is different from the target modality; a determination module, configured to determine pieces of candidate data corresponding to the retrieval data in the target modality; an input module, configured to input the retrieval data and the pieces of candidate data into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the method for model training; and a retrieval module, configured to determine, based on the encoding result corresponding to the retrieval data and the encoding results corresponding to the pieces of candidate data, an information retrieval result for the retrieval data.

The present specification provides a computer-readable storage medium, wherein the storage medium stores a computer program, and the computer program, when executed by a processor, implements the above method for model training and information retrieval.

The present specification provides an electronic device, including a memory, a processor, and a computer program stored in the memory and operable on the processor, wherein the processor, when executing the program, implements the above method for model training and information retrieval.

At least one of the above technical solutions adopted in the present specification can achieve the following beneficial effects. In the method for model training and information retrieval provided in the present specification, a retrieval model may be acquired, wherein the retrieval model comprises a plurality of encoders, and different ones of the plurality of encoders are configured to encode data of different modalities. Then, a first encoder and a second encoder are selected from the retrieval model, and a first training sample in a modality corresponding to the first encoder is acquired, and a second training sample in a modality corresponding to the second encoder is acquired. The first training sample and the second training sample are input into the retrieval model, so as to encode the first training sample through the first encoder to obtain a first encoding result, and encode the second training sample through the second encoder to obtain a second encoding result, and determine, through the first encoding result and the second encoding result, a matching result between the first training sample and the second training sample. Then, the first encoder and the second encoder may be trained based on the matching result, network parameters in the trained first encoder are fixed, and, for each other encoder in the retrieval model other than the first encoder and the second encoder, an acquired third training sample in a modality corresponding to the other encoder is input into the other encoder, so as to train the other encoder based on an encoding result output by the other encoder and an encoding result output by the trained first encoder with the network parameters fixed.

It can be seen from the above that, compared with a conventional approach in which a model needs to be constructed for each pair of modalities, the model is trained, and retrieval between the two modalities is performed through the model, the method for model training and information retrieval provided in the present specification can greatly improve the efficiency of model training. Since an encoder of one modality can serve as a bridge for associating encoders of other modalities, the other modalities do not need to be mutually trained again, thereby reducing the number of models and the number of training operations. The greater the number of modalities, the more this method can avoid a large number of model training processes, reduce the number of stored models, and improve the convenience of using models for information retrieval in practice.

### BRIEF DESCRIPTION OF THE DRAWINGS

The accompanying drawings described herein are intended to provide a further understanding of the present specification and constitute a part of the present specification. The illustrative embodiments of the present specification and descriptions thereof are intended to explain the present specification and do not constitute an undue limitation on the present specification. In the drawings:
FIG. 1 is a schematic flowchart of a method for model training according to the present specification;
FIG. 2 is a schematic diagram of feature encoding according to the present specification;
FIG. 3 is a schematic flowchart of a method for information retrieval according to the present specification;
FIG. 4 is a schematic diagram of an apparatus for model training according to the present specification;
FIG. 5 is a schematic diagram of an apparatus for information retrieval according to the present specification;
FIG. 6 is a schematic diagram of an electronic device corresponding to FIG. 1 or FIG. 3 according to the present specification.

### DETAILED DESCRIPTION

In order to make the objectives, technical solutions, and advantages of the present specification clearer, the technical solutions of the present specification will be clearly and completely described below with reference to specific embodiments of the present specification and the accompanying drawings. Apparently, the described embodiments are merely some rather than all of the embodiments of the present specification. All other embodiments obtained by persons of ordinary skill in the art on the basis of the embodiments in the present specification without creative efforts shall fall within the protection scope of the present specification.

The technical solutions provided in the embodiments of the present specification are described in detail below with reference to the accompanying drawings.

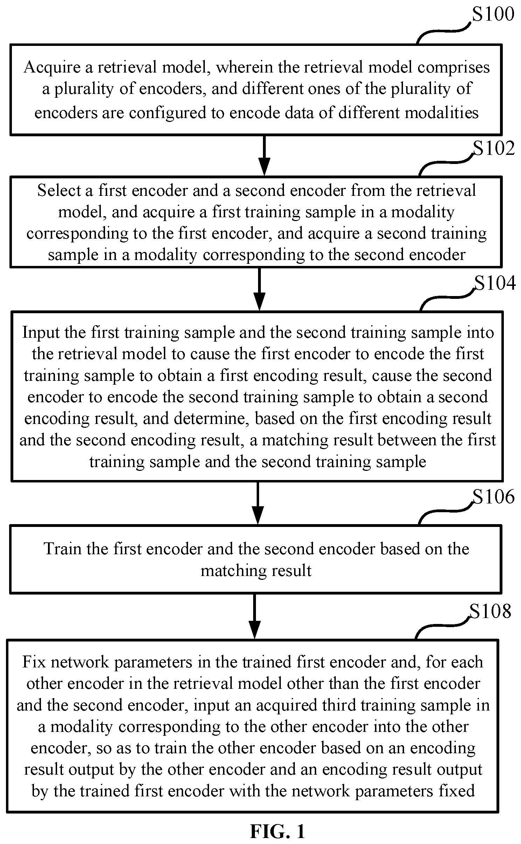

FIG. 1 is a schematic flowchart of a method for model training according to the present specification, specifically including the following steps S100 to S108.

S100: a retrieval model is acquired, wherein the retrieval model comprises a plurality of encoders, and different ones of the plurality of encoders are configured to encode data of different modalities.

In practical applications, a service platform needs to train a retrieval model for information retrieval. The retrieval model is used for providing retrieval services for users, may be used by the service platform for an information recommendation service, and may also be used by the service platform in other services related to information retrieval.

Based on this, a retrieval model to be trained may be acquired. The retrieval model includes a plurality of encoders, and different encoders are configured to encode data of different modalities.

The modalities in the present specification may include a text modality, an image modality, a video modality, an audio modality, and a service sequence modality. Correspondingly, the data of the modalities include text data, image data, video data, audio data, and service sequence data. The service sequence data may refer to sensor sequence data, acquired by a user device such as a mobile phone or a wristband, that represents motion characteristics of a user, and may also refer to operation records of a user in an application provided by the service platform through a device such as a mobile phone or a tablet.

S102: a first encoder and a second encoder are selected from the retrieval model, and a first training sample in a modality corresponding to the first encoder is acquired, and a second training sample in a modality corresponding to the second encoder is acquired.

S104: the first training sample and the second training sample are input into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample.

S106: the first encoder and the second encoder are trained based on the matching result.

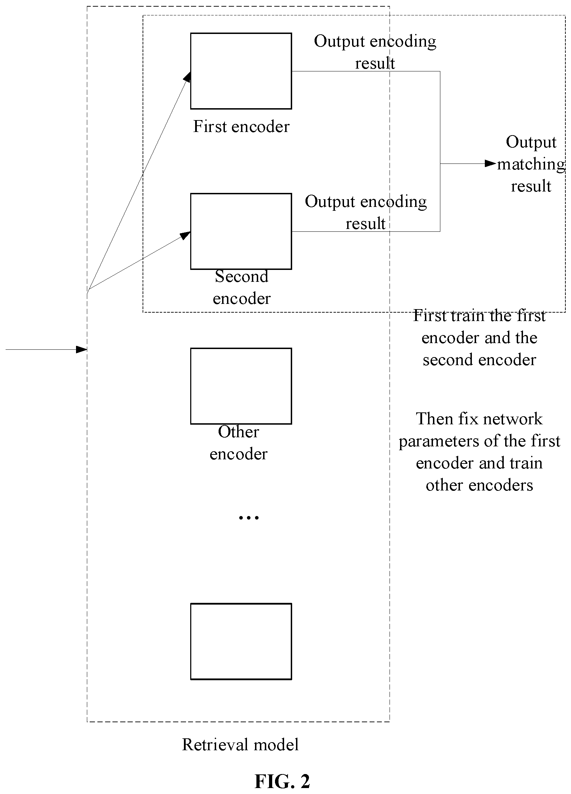

The training process of the retrieval model may be divided into two parts. In the first part, two encoders in the retrieval model need to be trained. In the second part, the parameters of one of the two encoders trained in the first part of the retrieval model need to be fixed, so as to train the remaining encoders. Therefore, the structure of the retrieval model may be as shown in FIG. 2.

FIG. 2 is a schematic structural diagram of a retrieval model according to the present specification.

Based on this, during the training process of the first part, the service platform may select a first encoder and a second encoder from the retrieval model to be trained, and acquire a first training sample in a modality corresponding to the first encoder, and acquire a second training sample in a modality corresponding to the second encoder. The first training sample mentioned herein is data in the modality corresponding to the first encoder. Similarly, the second training sample is data in the modality corresponding to the second encoder.

Then, the first training sample and the second training sample may be input into the above retrieval model, so as to encode the first training sample through the first encoder to obtain a first encoding result, and encode the second training sample through the second encoder to obtain a second encoding result, and determine, through the first encoding result and the second encoding result, a matching result between the first training sample and the second training sample. The first encoder and the second encoder are then trained based on the matching result.

The matching result mentioned above may indicate whether there is a matching relationship between the first training sample and the second training sample as predicted by the retrieval model, or a degree of matching between the first training sample and the second training sample as predicted by the retrieval model. By way of example of the concept of matching mentioned in the present specification, for an image and a piece of text, if the piece of text is related to the image content in the image, the piece of text may be regarded as matching the image.

During training, annotation information between the first training sample and the second training sample may be determined. The annotation information may be used for representing an actual matching relationship between the first training sample and the second training sample. Then, the first encoder and the second encoder may be trained with minimizing a difference between the annotation information and the matching result as an optimization objective.

In the training process of the first encoder and the second encoder, there may be positive samples, that is, matching first training samples and second training samples, and negative samples, that is, non-matching first training samples and second training samples. When the first encoder and the second encoder are trained by using the positive samples and the negative samples:

if it is determined, based on the above annotation information, that the first training sample matches the second training sample, the first encoder and the second encoder may be trained with minimizing a difference between the first encoding result and the second encoding result and minimizing a difference between the annotation information and the matching result as optimization objectives.

If it is determined, based on the annotation information, that the first training sample does not match the second training sample, the first encoder and the second encoder are trained with maximizing a difference between the first encoding result and the second encoding result and minimizing a difference between the annotation information and the matching result as optimization objectives.

That is, during training, the distance between encoding results corresponding to two training samples in a positive sample pair may be reduced, and the distance between encoding results corresponding to two training samples in a negative sample pair may be increased.

S108: network parameters in the trained first encoder are fixed and, for each other encoder in the retrieval model other than the first encoder and the second encoder, an acquired third training sample in a modality corresponding to the other encoder is input into the other encoder, so as to train the other encoder based on an encoding result output by the other encoder and an encoding result output by the trained first encoder with the network parameters fixed.

After completion of the first part of the training process of the above steps, network parameters in the trained first encoder may be fixed, and, for each other encoder in the retrieval model other than the first encoder and the second encoder, an acquired third training sample in a modality corresponding to the other encoder is input into the other encoder, so as to train the other encoder based on an encoding result output by the other encoder and an encoding result output by the trained first encoder with the network parameters fixed. In this training process, the training samples in the modality corresponding to the first encoder that are used may be different from those used in the first part of training.

That is to say, in the above process, the first encoder serves as an intermediate bridge for associating the second encoder with the other encoders. In the first part of the training process, by sufficiently training the first encoder and the second encoder in the retrieval model, feature extraction by the retrieval model for the modality corresponding to the first encoder and the modality corresponding to the second encoder can be aligned.

In the second part, the parameters of the first encoder are fixed and the other encoders are trained. Since the other encoders are trained while the first encoder remains unchanged, not only can features corresponding to the modality of the first encoder and features corresponding to the modalities of the other encoders be aligned, but also features corresponding to the modality of the second encoder and the features of the modalities corresponding to the other encoders can be aligned.

Accordingly, if retrieval among the modalities is to be implemented, retrieval between the modalities corresponding to any two encoders may be implemented through the two encoders.

When the parameters of the trained first encoder are fixed and the other encoders are trained, the training is similar to the training of the first encoder and the second encoder.

Specifically, sample pairs corresponding to the first encoder and the other encoders include corresponding data in the modality corresponding to the first encoder and data in modalities corresponding to the other encoders. The sample pairs may include positive samples and negative samples. For positive samples, a difference between an encoding result output by the trained first encoder and an encoding result output by the other encoder may be minimized. For negative samples, a difference between an encoding result output by the trained first encoder and an encoding result output by the other encoder may be maximized. Meanwhile, for each sample pair, a difference between annotation information and a matching result determined through the encoding result output by the trained first encoder and the encoding result output by the other encoder may be minimized. Here, the annotation information mentioned herein is an actual matching relationship between the two pieces of data in the sample pair.

It should be noted that the first encoder in the retrieval model may be an encoder corresponding to the text modality, the second encoder may be an encoder corresponding to the image modality, and the other encoders may respectively be encoders corresponding to the audio modality, the video modality, and the service sequence modality. Certainly, the first encoder, the second encoder, and the other encoders may be replaced with encoders corresponding to any modalities. For example, the first encoder may also be an encoder corresponding to the image modality, the second encoder may be an encoder corresponding to the video modality, and the other encoders may be encoders corresponding to the remaining modalities. The specific modalities corresponding to the encoders may be set according to actual requirements.

In the present specification, complete training samples may include training samples for training the first encoder and the second encoder, and training samples for training the first encoder and the other encoders. For both types of training samples, the samples are in the form of sample pairs, and in the method, sample pairs may be automatically generated through a generation model.

Specifically, a first training sample in the modality corresponding to the first encoder may be acquired, and the first training sample may be input into a preset generation model, so that the generation model outputs, on the basis of the first training sample, data in the modality corresponding to the second encoder as generated data corresponding to the first training sample; and the second training sample in the modality corresponding to the second encoder is acquired based on the generated data corresponding to the first training sample. The generation model mentioned herein may be an existing model for generating text, images, audio, or video.

That is, the generation model may generate data of another modality on the basis of data of one modality. For example, the generation model may generate a matching image from input text. The text and the generated matching image may form positive samples, and the text and other images generated by the generation model, namely images that do not match the text, may form negative samples. Certainly, the generation model may also be designated to generate, in another modality, data matching data of one modality, and data in another modality that does not match the data of the one modality.

Thus, by the method, a unified neural network model, namely the retrieval model, may be obtained, which includes a text encoder, an image encoder, an audio encoder, a video encoder, and a sequence encoder. For data of each modality, corresponding features only need to be extracted once through the corresponding encoder, and, during feature retrieval, cross-modality feature comparison may be performed on the basis of the features extracted by the model.

Since features of the text modality are used as an anchor point during training, features of text, image, video, audio, and sequence modalities are aligned in the feature space. In addition to being used for feature retrieval between text and each of image, audio, video, and sequence modalities, the model is also applicable to pairwise feature retrieval between any two modalities, such as between audio and image, or between image and sequence.

The above description explains the method from the perspective of model training. The method is described below from the perspective of actual use of the model.

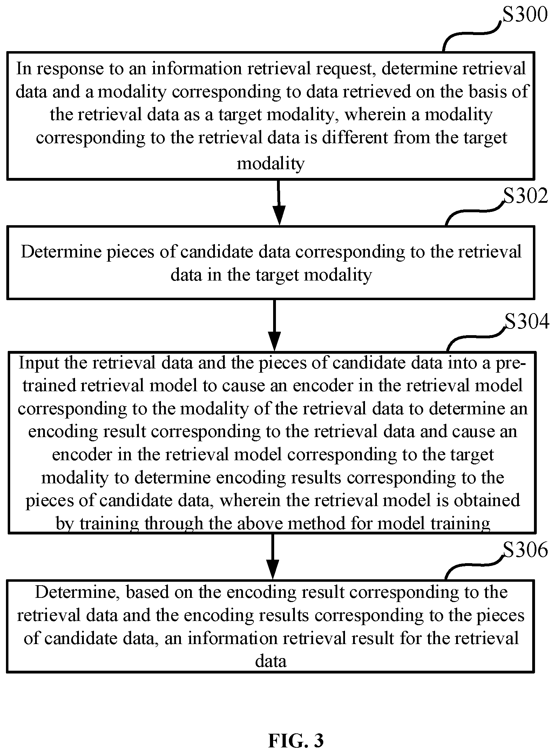

FIG. 3 is a schematic flowchart of a method for information retrieval according to the present specification, specifically including the following steps S300 to S306.

S300: in response to an information retrieval request, retrieval data is determined, and a modality corresponding to data retrieved on the basis of the retrieval data is determined as a target modality, wherein a modality corresponding to the retrieval data is different from the target modality.

S302: pieces of candidate data corresponding to the retrieval data in the target modality are determined.

S304: the retrieval data and the pieces of candidate data are input into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the above method for model training.

S306: based on the encoding result corresponding to the retrieval data and the encoding results corresponding to the pieces of candidate data, an information retrieval result for the retrieval data is determined.

In the present specification, after the trained retrieval model is obtained, if there is a retrieval requirement between any two modalities, the retrieval may be completed through the encoders of the two modalities in the retrieval model.

Specifically, in response to the information retrieval request, the service platform may determine retrieval data and a modality corresponding to data to be retrieved on the basis of the retrieval data as a target modality, wherein a modality corresponding to the retrieval data is different from the target modality.

Then, the pieces of candidate data corresponding to the retrieval data in the target modality may be determined. The pieces of candidate data mentioned herein may be all data in the target modality, or may be partial data in the target modality screened out by a certain manner.

The retrieval data and the pieces of candidate data are input into the pre-trained retrieval model, so as to determine, through the encoder in the retrieval model corresponding to the modality of the retrieval data, the encoding result corresponding to the retrieval data, and determine, through the encoder in the retrieval model corresponding to the target modality, the encoding results corresponding to the pieces of candidate data, and determine, based on the encoding result corresponding to the retrieval data and the encoding results corresponding to the pieces of candidate data, the information retrieval result for the retrieval data. The retrieval model is obtained by training through the above method for model training.

Specifically, which one or ones of the pieces of candidate data match the retrieval data may be determined based on a correlation between the encoding result corresponding to the retrieval data and the encoding results corresponding to the pieces of candidate data, for example, determined by a correlation coefficient or determined by a neural network module in the retrieval model, thereby obtaining the information retrieval result for the retrieval data.

In practical applications, there are many scenarios of pairwise mutual retrieval, such as between text and image, between text and audio, between text and video, between video and image, and between video and audio. Here, a retrieval scenario between service sequence data and data of other modalities is described. For example, for sensor sequence data acquired through a mobile phone, a wristband, or the like and capable of representing a motion state of a user, relevant videos, audio, and text may be retrieved according to such sequence data and recommended to the user. For example, if the user is exercising, relevant post-exercise relaxation videos, music suitable for exercise, and the like may be retrieved and recommended to the user.

It can be seen from the above that, compared with a conventional approach in which a model needs to be constructed for each pair of modalities, the model is trained, and retrieval between the two modalities is performed through the model, the method for model training and information retrieval provided in the present specification can greatly improve the efficiency of model training. Since an encoder of one modality can serve as a bridge for associating encoders of other modalities, the other modalities do not need to be mutually trained again, thereby reducing the number of models and the number of training operations. The greater the number of modalities, the more this method can avoid a large number of model training processes, reduce the number of stored models, and improve the convenience of using models for information retrieval in practice.

It should be noted that, for ease of description, in the foregoing description, the executing subject that executes the method is described as a service platform. The executing subject of the method may be a server, a computer, or the like, which is not limited herein.

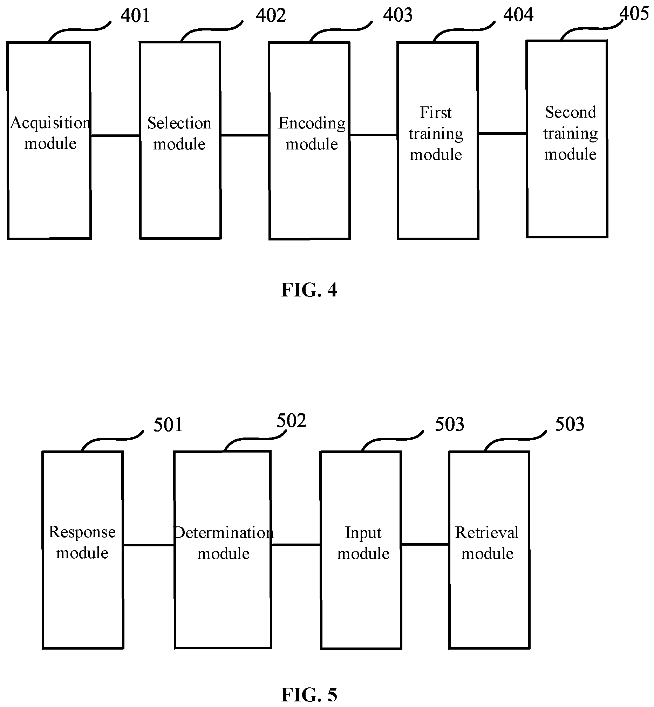

The above is a method for model training and information retrieval provided in one or more embodiments of the present specification. Based on the same concept, the present specification further provides apparatuses for model training and information retrieval, as shown in FIG. 4 and FIG. 5.

FIG. 4 is a schematic diagram of an apparatus for model training according to the present specification, specifically including:
an acquisition module 401, configured to acquire a retrieval model, wherein the retrieval model comprises a plurality of encoders, and different ones of the plurality of encoders are configured to encode data of different modalities;
a selection module 402, configured to select a first encoder and a second encoder from the retrieval model, and acquire a first training sample in a modality corresponding to the first encoder, and acquire a second training sample in a modality corresponding to the second encoder;
an encoding module 403, configured to input the first training sample and the second training sample into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample;
a first training module 404, configured to train the first encoder and the second encoder based on the matching result; and
a second training module 405, configured to fix network parameters in the trained first encoder and, for each other encoder in the retrieval model other than the first encoder and the second encoder, input an acquired third training sample in a modality corresponding to the other encoder into the other encoder, so as to train the other encoder based on an encoding result output by the other encoder and an encoding result output by the trained first encoder with the network parameters fixed.

In some examples, data of the modalities comprise at least one of text data, image data, video data, audio data, and service sequence data.

In some examples, the first training module 404 is specifically configured to determine annotation information between the first training sample and the second training sample, wherein the annotation information represents an actual matching relationship between the first training sample and the second training sample; if it is determined, based on the annotation information, that the first training sample matches the second training sample, train the first encoder and the second encoder with minimizing a difference between the first encoding result and the second encoding result and minimizing a difference between the annotation information and the matching result as optimization objectives; and if it is determined, based on the annotation information, that the first training sample does not match the second training sample, train the first encoder and the second encoder with maximizing a difference between the first encoding result and the second encoding result and minimizing a difference between the annotation information and the matching result as optimization objectives.

In some examples, the selection module 402 is specifically configured to acquire the first training sample in the modality corresponding to the first encoder, and input the first training sample into a preset generation model to cause the generation model to output, based on the first training sample, data in the modality corresponding to the second encoder as generated data corresponding to the first training sample; and acquire the second training sample in the modality corresponding to the second encoder based on the generated data corresponding to the first training sample.

FIG. 5 is a schematic diagram of an apparatus for information retrieval according to the present specification, specifically including:
a response module 501, configured to, in response to an information retrieval request, determine retrieval data and a modality corresponding to data retrieved on the basis of the retrieval data as a target modality, wherein a modality corresponding to the retrieval data is different from the target modality;
a determination module 502, configured to determine pieces of candidate data corresponding to the retrieval data in the target modality;
an input module 503, configured to input the retrieval data and the pieces of candidate data into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the method for model training;
and a retrieval module 504, configured to determine, based on the encoding result corresponding to the retrieval data and the encoding results corresponding to the pieces of candidate data, an information retrieval result for the retrieval data.

The present specification further provides a computer-readable storage medium. The storage medium stores a computer program, and the computer program may be used for executing the above method for model training and information retrieval.

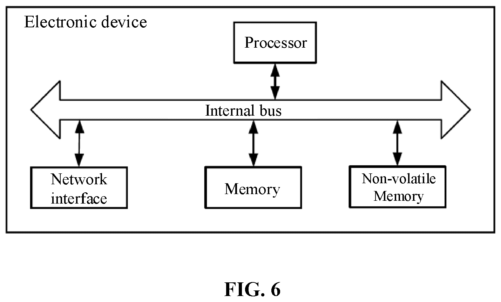

The present specification further provides a schematic structural diagram of the electronic device shown in FIG. 6. As shown in FIG. 6, at the hardware level, the electronic device includes a processor, an internal bus, a network interface, a memory, and a non-volatile memory, and of course may further include hardware required by other services. The processor reads a corresponding computer program from the non-volatile memory into the memory and then runs the computer program, so as to implement the above method for model training and information retrieval. Certainly, in addition to a software implementation, the present specification does not exclude other implementation manners, such as logical devices or a combination of software and hardware. That is to say, the executing subject of the following processing flows is not limited to each logical unit, and may also be hardware or a logical device.

In the 1990s, for an improvement to a technology, it could be clearly distinguished whether it was an improvement in hardware, for example, an improvement to circuit structures such as diodes, transistors, and switches, or an improvement in software, namely an improvement to a method flow. However, with the development of technology, many improvements to method flows today may already be regarded as direct improvements to hardware circuit structures. Designers almost all obtain corresponding hardware circuit structures by programming improved method flows into hardware circuits. Therefore, it cannot be said that an improvement to a method flow cannot be implemented by a hardware entity module. For example, a Programmable Logic Device (PLD), such as a Field Programmable Gate Array (FPGA), is an integrated circuit whose logic function is determined by a user by programming the device. A designer programs a digital system to be "integrated" onto one PLD without needing a chip manufacturer to design and fabricate a dedicated integrated circuit chip. Moreover, nowadays, instead of manually fabricating integrated circuit chips, such programming is mostly implemented by using "logic compiler" software, which is similar to the software compiler used in program development and writing. The source code before compilation also needs to be written in a particular programming language, which is referred to as a Hardware Description Language (HDL). There is more than one HDL. Many HDLs exist, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language). Currently, the most commonly used are VHDL (Very-High-Speed Integrated Circuit Hardware Description Language) and Verilog. A person skilled in the art should also understand that by merely carrying out slight logical programming on the method flow using the above hardware description languages and programming the result into an integrated circuit, a hardware circuit implementing the logical method flow can be readily obtained.

A controller may be implemented in any suitable manner. For example, the controller may take the form of a microprocessor or processor, a computer-readable medium storing computer-readable program code executable by the microprocessor or processor, such as software or firmware, logic gates, switches, an Application Specific Integrated Circuit (ASIC), a programmable logic controller, or an embedded microcontroller. Examples of the controller include, but are not limited to, the following microcontrollers: ARC 625D, Atmel AT91SAM, Microchip PIC18F26K20, and Silicone Labs C8051F320. A memory controller may also be implemented as part of control logic of the memory. A person skilled in the art also knows that, in addition to implementing the controller purely in the form of computer-readable program code, the same function may be implemented by carrying out logical programming of method steps so that the controller is implemented in the form of logic gates, switches, an Application Specific Integrated Circuit, a programmable logic controller, an embedded microcontroller, or the like. Therefore, such a controller may be regarded as a hardware component, and devices included therein for implementing various functions may also be regarded as structures within the hardware component. Alternatively, the devices for implementing various functions may even be regarded as both software modules for implementing the method and structures within the hardware component.

The systems, apparatuses, modules, or units set forth in the above embodiments may specifically be implemented by a computer chip or an entity, or by a product having a certain function. A typical implementation device is a computer. Specifically, the computer may, for example, be a personal computer, a laptop computer, a cellular phone, a camera phone, a smart phone, a personal digital assistant, a media player, a navigation device, an email device, a game console, a tablet computer, a wearable device, or any combination of these devices.

For convenience of description, when the above apparatuses are described, the apparatuses are described as being divided into various units according to functions. Certainly, when the present specification is implemented, the functions of the units may be implemented in one or more items of software and/or hardware.

A person skilled in the art should understand that embodiments of the present specification may be provided as a method, a system, or a computer program product. Therefore, the present specification may take the form of an entirely hardware embodiment, an entirely software embodiment, or an embodiment combining software and hardware aspects. Moreover, the present specification may take the form of a computer program product implemented on one or more computer-usable storage media containing computer-usable program code, including but not limited to magnetic disk storage, CD-ROM, optical storage, and the like.

The present specification is described with reference to flowcharts and/or block diagrams of methods, apparatuses (systems), and computer program products according to embodiments of the present specification. It should be understood that each process and/or block in the flowcharts and/or block diagrams, and combinations of processes and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine, such that instructions executed by the processor of the computer or other programmable data processing device create means for implementing the functions specified in one or more processes of the flowcharts and/or one or more blocks of the block diagrams.

These computer program instructions may also be stored in a computer-readable memory that can direct a computer or another programmable data processing device to function in a particular manner, such that instructions stored in the computer-readable memory produce an article of manufacture including instruction means, and the instruction means implements the functions specified in one or more processes of the flowcharts and/or one or more blocks of the block diagrams.

These computer program instructions may also be loaded onto a computer or another programmable data processing device, so that a series of operational steps are performed on the computer or other programmable device to produce computer-implemented processing, and thus the instructions executed on the computer or other programmable device provide steps for implementing the functions specified in one or more processes of the flowcharts and/or one or more blocks of the block diagrams.

In a typical configuration, a computing device includes one or more processors (CPUs), an input/output interface, a network interface, and a memory.

The memory may include forms such as non-permanent storage in a computer-readable medium, a random access memory (RAM), and/or a non-volatile memory, such as a read-only memory (ROM) or a flash RAM. The memory is an example of a computer-readable medium.

Computer-readable media include permanent and non-permanent, removable and non-removable media that may implement information storage by any method or technology. The information may be computer-readable instructions, data structures, program modules, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette tape, magnetic tape, magnetic disk storage, or other magnetic storage devices, or any other non-transitory medium that may be used to store information accessible by a computing device. As defined herein, computer-readable media do not include transitory computer-readable media, such as modulated data signals and carrier waves.

It should further be noted that the terms "comprise," "include," or any other variation thereof are intended to cover a non-exclusive inclusion, such that a process, method, article, or device that comprises a series of elements includes not only those elements, but also other elements not expressly listed, or further includes elements inherent to such process, method, article, or device. In the absence of more limitations, an element defined by the statement "comprising one ..." does not exclude the presence of additional identical elements in the process, method, article, or device that comprises the element.

A person skilled in the art should understand that embodiments of the present specification may be provided as a method, a system, or a computer program product. Therefore, the present specification may take the form of an entirely hardware embodiment, an entirely software embodiment, or an embodiment combining software and hardware aspects. Moreover, the present specification may take the form of a computer program product implemented on one or more computer-usable storage media containing computer-usable program code, including but not limited to magnetic disk storage, CD-ROM, optical storage, and the like.

The present specification may be described in the general context of computer-executable instructions executed by a computer, such as program modules. Generally, program modules include routines, programs, objects, components, data structures, and the like that perform particular tasks or implement particular abstract data types. The present specification may also be practiced in distributed computing environments in which tasks are performed by remote processing nodes connected through a communication network. In distributed computing environments, program modules may be located in local and remote computer storage media, including storage nodes.

The embodiments in the present specification are described in a progressive manner, and identical or similar parts among the embodiments may be referred to one another. Each embodiment focuses on differences from the other embodiments. In particular, as to system embodiments, since they are substantially similar to method embodiments, the description thereof is relatively simple, and relevant parts may refer to the description of the method embodiments.

The above descriptions are merely embodiments of the present specification and are not intended to limit the present specification. For a person skilled in the art, various modifications and variations may be made to the present specification. Any modification, equivalent replacement, improvement, and the like made within the spirit and principle of the present specification shall fall within the scope of the claims of the present specification.

## Claims

1. A method for model training, comprising:
acquiring a retrieval model, wherein the retrieval model comprises a plurality of encoders, and different ones of the plurality of encoders are configured to encode data of different modalities;
selecting a first encoder and a second encoder from the retrieval model, and acquiring a first training sample in a modality corresponding to the first encoder, and acquiring a second training sample in a modality corresponding to the second encoder;
inputting the first training sample and the second training sample into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample;
training the first encoder and the second encoder based on the matching result; and
fixing network parameters in the trained first encoder and, for each other encoder in the retrieval model other than the first encoder and the second encoder, inputting an acquired third training sample in a modality corresponding to the other encoder into the other encoder, so as to train the other encoder based on an encoding result output by the other encoder and an encoding result output by the trained first encoder with the network parameters fixed.

2. The method according to claim 1, wherein data of the modalities comprise at least one of text data, image data, video data, audio data, and service sequence data.

3. The method according to claim 1, wherein training the first encoder and the second encoder based on the matching result comprises:
determining annotation information between the first training sample and the second training sample, wherein the annotation information represents an actual matching relationship between the first training sample and the second training sample;
if it is determined, based on the annotation information, that the first training sample matches the second training sample, training the first encoder and the second encoder with minimizing a difference between the first encoding result and the second encoding result and minimizing a difference between the annotation information and the matching result as optimization objectives; and
if it is determined, based on the annotation information, that the first training sample does not match the second training sample, training the first encoder and the second encoder with maximizing a difference between the first encoding result and the second encoding result and minimizing a difference between the annotation information and the matching result as optimization objectives.

4. The method according to claim 1, wherein acquiring the first training sample in the modality corresponding to the first encoder, and acquiring the second training sample in the modality corresponding to the second encoder, comprises:
acquiring the first training sample in the modality corresponding to the first encoder, and inputting the first training sample into a preset generation model to cause the preset generation model to output, based on the first training sample, data in the modality corresponding to the second encoder as generated data corresponding to the first training sample; and
acquiring the second training sample in the modality corresponding to the second encoder based on the generated data corresponding to the first training sample.

5. A method for information retrieval, comprising:
in response to an information retrieval request, determining retrieval data and a modality corresponding to data retrieved on the basis of the retrieval data as a target modality, wherein a modality corresponding to the retrieval data is different from the target modality;
determining pieces of candidate data corresponding to the retrieval data in the target modality;
inputting the retrieval data and the pieces of candidate data into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the method according to any one of claims 1 to 4; and
determining, based on the encoding result corresponding to the retrieval data and the encoding results corresponding to the pieces of candidate data, an information retrieval result for the retrieval data.

6. An apparatus for model training, comprising:
an acquisition module, configured to acquire a retrieval model, wherein the retrieval model comprises a plurality of encoders, and different ones of the plurality of encoders are configured to encode data of different modalities;
a selection module, configured to select a first encoder and a second encoder from the retrieval model, and acquire a first training sample in a modality corresponding to the first encoder, and acquire a second training sample in a modality corresponding to the second encoder;
an encoding module, configured to input the first training sample and the second training sample into the retrieval model to cause the first encoder to encode the first training sample to obtain a first encoding result, cause the second encoder to encode the second training sample to obtain a second encoding result, and determine, based on the first encoding result and the second encoding result, a matching result between the first training sample and the second training sample;
a first training module, configured to train the first encoder and the second encoder based on the matching result; and
a second training module, configured to fix network parameters in the trained first encoder and, for each other encoder in the retrieval model other than the first encoder and the second encoder, input an acquired third training sample in a modality corresponding to the other encoder into the other encoder, so as to train the other encoder based on an encoding result output by the other encoder and an encoding result output by the trained first encoder with the network parameters fixed.

7. The apparatus according to claim 6, wherein data of the modalities comprise at least one of text data, image data, video data, audio data, and service sequence data.

8. The apparatus according to claim 6, wherein the first training module is specifically configured to determine annotation information between the first training sample and the second training sample, wherein the annotation information represents an actual matching relationship between the first training sample and the second training sample; if it is determined, based on the annotation information, that the first training sample matches the second training sample, train the first encoder and the second encoder with minimizing a difference between the first encoding result and the second encoding result and minimizing a difference between the annotation information and the matching result as optimization objectives; and if it is determined, based on the annotation information, that the first training sample does not match the second training sample, train the first encoder and the second encoder with maximizing a difference between the first encoding result and the second encoding result and minimizing a difference between the annotation information and the matching result as optimization objectives.

9. The apparatus according to claim 6, wherein the selection module is specifically configured to acquire the first training sample in the modality corresponding to the first encoder, and input the first training sample into a preset generation model to cause the preset generation model to output, based on the first training sample, data in the modality corresponding to the second encoder as generated data corresponding to the first training sample; and acquire the second training sample in the modality corresponding to the second encoder based on the generated data corresponding to the first training sample.

10. An apparatus for information retrieval, comprising:
a response module, configured to, in response to an information retrieval request, determine retrieval data and a modality corresponding to data retrieved on the basis of the retrieval data as a target modality, wherein a modality corresponding to the retrieval data is different from the target modality;
a determination module, configured to determine pieces of candidate data corresponding to the retrieval data in the target modality;
an input module, configured to input the retrieval data and the pieces of candidate data into a pre-trained retrieval model to cause an encoder in the retrieval model corresponding to the modality of the retrieval data to determine an encoding result corresponding to the retrieval data and cause an encoder in the retrieval model corresponding to the target modality to determine encoding results corresponding to the pieces of candidate data, wherein the retrieval model is obtained by training through the method according to any one of claims 1 to 4; and
a retrieval module, configured to determine, based on the encoding result corresponding to the retrieval data and the encoding results corresponding to the pieces of candidate data, an information retrieval result for the retrieval data.

11. A computer-readable storage medium, wherein the storage medium stores a computer program, and the computer program, when executed by a processor, implements the method according to any one of claims 1 to 5.

12. An electronic device, comprising a memory, a processor, and a computer program stored in the memory and operable on the processor, wherein the processor, when executing the program, implements the method according to any one of claims 1 to 5.
